# EUROPÄISCHE PATENTANMELDUNG

(11) **EP 2 336 742 A1**
(43) Veröffentlichungstag der Anmeldung: **22.06.2011**
(21) Anmeldenummer: 09177875.3
(22) Anmeldetag: 03.12.2009
(51) Int. Cl.: G01L 5/22, G06K 9/00, G01B 5/28

(54) **Verfahren und System zur Erfassung der Kontaktierung einer Sensorfläche durch ein Objekt**

(71) Anmelder: Deutsche Telekom AG, 53113 Bonn (DE)
(72) Erfinder: Trinkel, Marian, 52372, Kreuzau OT Untermaubach (DE)

(57) **Zusammenfassung**

Die Erfindung betrifft ein Verfahren zur Erfassung der Kontaktierung einer Sensorfläche durch ein Objekt (4), insbesondere zur Bestimmung der Oberflächenstruktur eines Oberflächenbereiches eines Objektes (4), bei dem ein Oberflächenbereich (3) eines Objektes (4) eine Sensorfläche (1) kontaktiert, insbesondere in Kontakt gebracht wird mit einer Sensorfläche (1), welche wenigstens ein Tastelement (2) umfasst, wobei das wenigstens eine Tastelement (2) durch den Kontakt elastisch verformt wird und in Abhängigkeit der Verformung ein elektrisches Signal erzeugt, welches mittels einer Signalerfassungsvorrichtung erfasst wird. Die Erfindung betrifft weiterhin ein System zur Erfassung der Kontaktierung einer Sensorfläche (1) durch ein Objekt (4), insbesondere zur Erfassung der Struktur eines Oberflächenbereiches (3) eines Objektes (4), welches einen Sensor mit einer Sensorfläche (1) umfasst, welche wenigstens ein Tastelement (2) aufweist, das in Kontakt mit dem Oberflächenbereich (3) bringbar ist, wobei das wenigstens eine Tastelement (2) durch den Kontakt elastisch verformbar ist und in Abhängigkeit der Verformung mit dem wenigstens einen Tastelement (2) ein elektrisches Signal erzeugbar ist.

## Beschreibung

Die Erfindung betrifft ein Verfahren sowie auch ein System zur Erfassung der Kontaktierung einer Sensorfläche durch ein Objekt, insbesondere zur Bestimmung der Oberflächenstruktur eines Oberflächenbereiches eines Objektes.

Solche Verfahren und Systeme sind im Stand der Technik beispielsweise bekannt, um die Oberflächenstruktur von Fingerkuppen zu bestimmen bzw. zu erfassen, beispielsweise um so Personen zu identifizieren. Hierfür werden oftmals optische Systeme eingesetzt, die ein optisches Abbild der Fingerkuppe erzeugen oder auch Systeme, die eine Fingerkuppe thermografisch erfassen.

Im Stand der Technik hat sich dabei gezeigt, dass solche Verfahren und Systeme oftmals nicht sehr zuverlässig arbeiten, so dass häufig Personen nicht richtig erkannt werden. Darüber hinaus sind diese im Stand der Technik bekannten Verfahren und Systeme speziell auf die Erkennung von Fingerkuppen und deren Rillenstruktur angepasst, so dass mittels diesen Verfahren und Vorrichtungen andersartige Oberflächen nicht bestimmt bzw. erfasst werden können.

Auch sind allgemein Sensoren zur Erfassung einer Kontaktierung bekannt, z.B. solche Sensoren, die bei Kontakt eine kapazitive Änderung feststellen und hieraus einen Kontakt ermitteln. Hier ist es nachteilig, dass solche Sensoren einem Nutzer keinerlei unmittelbare Rückmeldung über eine erfolgte Kontaktierung bereitstellen.

Es ist daher die Aufgabe der Erfindung, ein Verfahren und ein System bereit zu stellen, mittels dem eine Kontaktierung einer Sensorfläche durch ein Objekt, sicher festgestellt und rückgekoppelt werden kann sowie insbesondere mittels dem die Oberflächenstruktur eines Oberflächenbereiches eines Objektes zuverlässig erfasst werden kann, wobei es eine weitere Aufgabe der Erfindung ist, im Wesentlichen die Oberflächenstruktur von beliebigen Objekten bestimmen zu können. Bevorzugte Aufgabe ist es weiterhin, ein Verfahren und System zur Fingerabdruckerkennung bereit zu stellen.

Diese Aufgabe wird gemäß der Erfindung dadurch gelöst, dass ein Oberflächenbereich eines Objektes eine Sensorfläche kontaktiert, insbesondere in Kontakt gebracht wird mit einer Sensorfläche, welche wenigstens ein Tastelement umfasst, wobei das wenigstens eine Tastelement durch den Kontakt elastisch verformt wird und in Abhängigkeit der Verformung ein elektrisches Signal erzeugt, welches mittels einer Signalerfassungsvorrichtung erfasst wird. In analoger Weise wird die Aufgabe gelöst durch ein System, welches zur Ausführung dieser Verfahrensschritte eingerichtet ist.

Der wesentliche Kerngedanke der Erfindung beruht darauf, Oberflächenstrukturen nicht wie bisher optisch oder thermografisch zu erfassen, sondern durch ein tatsächliches Tasten, wofür es vorgesehen ist, dass eine erfindungsgemäße Sensorfläche eines erfindungsgemäßen Systems wenigstens ein elastisch verformbares Tastelement aufweist, so dass durch eine Kontaktierung zwischen dem zu erfassenden bzw. zu bestimmenden Oberflächenbereich eines Objektes und dem wenigstens einen Tastelement eine elastische Verformung dieses wenigstens einen Tastelements erzeugt wird. Auf diese Art kann auch eine Erkennung / Identifikation einer Person durch Tasten / Fühlen unterstützt werden.

Eine solche elastische Verformung wird dabei umso größer sein, je stärker die Andruckkraft des Objektes bzw. des Oberflächenbereiches des Objektes an das wenigstens eine Tastelement ist. Wird demnach ein Oberflächenbereich eines Objektes an eine solche Sensorfläche herangeführt, so wird ein Tastelement durch einen von der Objektoberfläche vorspringenden Bereich eher und mit einer größeren Kraft kontaktiert und somit verformt als in einem rückspringenden oder ebenen Bereich.

Es besteht demnach die Möglichkeit, in Abhängigkeit von der Verformung eines jeweiligen Tastelementes das durch das Tastelement erzeugte Signal zu erfassen und auszuwerten und aus diesem Signal eine Information über die Oberflächenstruktur zu erhalten, insbesondere darüber, ob der ein Tastelement kontaktierende Oberflächenbereich einen Vorsprung, Rücksprung oder einen ebenen Bereich hat, insbesondere im Vergleich zu umgebenden Oberflächenbereichen, die mittels des wenigstens einen Tastelementes z.B. zeitlich nacheinander oder aber auch durch mehrere Tastelemente gleichzeitig erfasst werden können.

So kann es in einer bevorzugten Ausführungsform des Verfahrens vorgesehen sein, dass die Sensorfläche nicht nur ein einziges Tastelement umfasst, sondern in bevorzugter Weise eine Vielzahl von Tastelementen umfasst, die zur Ausbildung eines Tastfeldes zumindest in zwei Dimensionen nebeneinander angeordnet sind, wobei durch den Kontakt die jeweils kontaktierten Tastelemente der Sensorfläche elastisch verformt werden, bzw. verformt werden können und jeweils in Abhängigkeit Ihrer Verformung ein elektrisches Signal erzeugen, wobei die elektrischen Signale der Tastelemente, bevorzugt aller Tastelemente der Sensorfläche mittels einer Signalerfassungsvorrichtung erfasst werden.

Durch eine solche Anordnung von mehreren Tastelementen in der Art eines Tastfeldes besteht demnach die Möglichkeit, gemäß der Erfindung wenigstens ein zumindest zweidimensionales elektrisches bzw. elektronisches Abbild der Struktur der abgetasteten Oberfläche zu erzeugen. Wird nämlich beispielsweise der Oberflächenbereich eines Objektes an die Sensorfläche herangeführt und kontaktiert diese, so wird in denjenigen Oberflächenbereichen mit Vorsprüngen eine stärkere Kraft auf das jeweils kontaktierte Tastelement ausgeübt als im Vergleich zu rückspringenden oder ebenen Oberflächenbereichen.

Die einzelnen kontaktierten Tastelemente geben demnach aufgrund ihrer Verformung und der damit einhergehenden jeweiligen elektrischen Signale eine Information über die Struktur des Oberflächenbereiches am Ort der Abtastung bzw. Kontaktierung mit dem jeweiligen Tastelement.

Es können somit die Tastelemente hinsichtlich ihrer elektrischen Signale ortsaufgelöst erfasst werden, z.B. in einer XY-Matrix, so dass ein elektrisches bzw. elektronisches Abbild des kontaktierten Oberflächenbereiches erstellt werden kann durch Speicherung des jeweiligen elektrischen Signals des jeweiligen Tastelementes des gesamten Tastfeldes insbesondere in Abhängigkeit von der Koordinate des jeweiligen Tastelements im Tastfeld..

Bevorzugt werden Tastelemente eingesetzt, deren Tastspitzen, also diejenigen mit einem Oberflächenbereich in Kontakt tretenden Endteile der Tastelemente einen Querschnitt aufweisen, der kleiner ist als die Strukturdimensionen, die in einem Oberflächenbereich eines Objektes aufgelöst werden sollen. Mit der beispielhaften Anwendung zur Bestimmung bzw. Erfassung der Oberflächenstruktur oder Rauhigkeit einer Fingerkuppe werden demnach bevorzugt solche Tastelemente gewählt, deren Querschnitt der Tastspitze kleiner gleich der Rillenbreite ist von den Rillen einer Fingerkuppe eines durchschnittlichen Menschen.

Für speziell diese Anwendung sowie aber auch mit allgemeiner Gültigkeit, d.h. zur Erfassung auch sonstiger Oberflächenbereiche anderer Objekte, kann es demnach in einer bevorzugten Weiterbildung des Verfahrens vorgesehen sein, dass als Tastelemente in der Sensorfläche Nanoröhrchen eingesetzt werden, die bei elastischer Verformung ein von der Verformung abhängiges elektrisches Signal erzeugen.

Beispielsweise kann es sich demnach um piezoelektrische Nanoröhrchen handeln, die bei Stauchung, Biegung etc. ein elektrisches Signal, insbesondere aufgrund von Ladungstrennung erzeugen, wobei ein solches Signal durch die eingangs genannte Signalerfassungsvorrichtung von einem jeden Nanoröhrchen oder auch gesammelt über einen Bereich von mehreren Nanoröhrchen erfasst werden kann. Hierfür können z.B. an den Nanoröhrchen innere und äußere Elektroden, gegebenenfalls auch mehrere, über den jeweiligen inneren oder äußeren Umfang verteilte Elektroden eingesetzt werden, wobei die Spannungsdifferenz zwischen den jeweiligen Elektroden erfasst werden kann, um so Stauchungen, Biegungen oder sonstige elastische Verformungen aufgrund der Ladungstrennung detektieren zu können.

Hierbei haben Nanoröhrchen besondere Vorteile, da sie senkrecht zu ihrer Längserstreckung Querschnittsdurchmesser, beispielsweise lediglich 1 - 50 Nanometer, aufweisen können im Vergleich zu einer Längenerstreckung von beispielsweise auch mehreren Millimetern. Solche Nanoröhrchen können demnach mit ihrem einen Rohrende direkt oder indirekt an einer Grundplatte befestigt sein, wohingegen sodann das gegenüberliegende freie Ende eines solchen Nanoröhrchens, welches offen oder auch geschlossen sein kann, eine Tastspitze ausbildet.

Derartige Tastspitzen von solchen Nanoröhrchen sind demnach derart fein, dass Oberflächenstrukturen im Nanometerbereich abgetastet und erfasst werden können, so dass sich gerade solche Nanoröhrchen hervorragend eignen, um Fingerabdrücke und somit die Oberflächenstruktur einer Fingerkuppe messtechnisch zu erfassen.

Die Ausführung kann hierbei bevorzugt so gewählt sein, dass unabhängig davon, ob die Tastelemente als Nanoröhrchen oder auf andere Art ausgebildet sind, solche Tastelemente bezüglich ihrer Längserstreckung parallel zueinander angeordnet sind und demnach die freien Enden der Tastelemente Tastspitzen ausbilden, die die Objektoberfläche kontaktieren. Die Vielzahl der nebeneinander liegenden Tastspitzen bildet demnach eine Tastfläche, mittels der die Abtastung eines Oberflächenbereiches erfolgt.

Hierbei kann die Vielzahl der Tastspitzen in einer Ebene angeordnet sein, ebenso wie auch in einer zumindest zweidimensional gekrümmten Fläche. Eine solche, zumindest zweidimensionale Krümmung der Tastfläche bietet sich insbesondere auch wiederum in Verbindung mit der Anwendung bei der Erfassung der Oberflächenstruktur von Fingerkuppen an, da Fingerkuppen eine gerundete Oberfläche aufweisen und demnach erfindungsgemäß die Möglichkeit besteht, beispielsweise durch unterschiedliche Längen der einzelnen Tastelemente, eine an die zu erfassende Oberfläche, beispielsweise eine an die Fingerkuppe angepasste Tastfläche auszubilden.

Eine Erfassung der Oberflächenstruktur eines Oberflächenbereiches eines grundsätzlich beliebigen Objektes kann bereits dadurch erfolgen, dass dieser Oberflächenbereich in Kontakt zu dem wenigstens einen Tastelement der Sensorfläche gebracht wird, wobei sodann von den einzelnen Tastelementen das jeweilige erzeugte, zur Verformung korrespondierende elektrische Signal erfasst und beispielsweise gespeichert wird.

In einer Weiterbildung kann es auch vorgesehen sein, dass die Sensorfläche, insbesondere die durch die Tastspitzen mehrerer Tastelemente ausgebildete Tastfläche und die Objektoberfläche während der Kontaktierung zumindest zeitweise relativ zueinander bewegt werden. Dabei kann es vorgesehen sein, in Abhängigkeit der Bewegungsweite und/oder der Zeit der Bewegung die elektrischen Signale des wenigstens einen Tastelementes zu erfassen und/oder zu speichern.

So kann gerade durch die Bewegung erzielt werden, dass die einzelnen Tastspitzen der Tastelemente genauer an die Oberflächenstruktur anlegen und ein genaueres Tastergebnis liefern und/oder dass sie nacheinander verschiedene Oberflächenbereiche kontaktieren und somit in Abhängigkeit der Bewegungsweite oder der Zeit ein variables elektrisches Abbild der Oberflächenstruktur durch die Erfassung der jeweiligen Messsignale liefern. Es besteht so auch die Möglichkeit, Sensoren auszubilden, die kleiner sind als die gewünschte zu erfassende Oberfläche eines Objektes, so dass die Oberflächenabtastung in der gewünschten Gesamtheit zeitlich aufeinander folgend erfolgt. Beispielsweise kann ein Sensor auch lediglich als ein Zeilensensor aufgebaut sein, so dass sich die gesamte Flächeninformation dadurch ergibt, dass Sensorfläche und Oberflächenbereich in einer beispielhaften linearen Richtung, insbesondere senkrecht zum Zeilensensor aneinander vorbeibewegt werden.

In einer bevorzugten Ausbildung kann es auch vorgesehen sein, dass die Sensorfläche und damit die Tastelemente bzw. deren Tastspitzen in ihrer Gesamtheit wenigstens eindimensional oszillierend bzw. vibrierend bewegt wird/werden. Auch so wird erzielt, dass sich die einzelnen Tastspitzen der Tastelemente sehr genau an die Oberflächenstruktur des kontaktierten Oberflächenbereiches anpassen und somit ein entsprechend genaues elektrisches/elektronisches Abbild dieser Oberflächenstruktur liefern können.

Für die Vibration bzw. Oszillation kann es vorgesehen sein, Frequenzen auszuwählen, die eine stimulierende Funktion auf die Haut einer Person ausüben, z.B. in einem Bereich von z.B. 18 bis 35 Hz oder 200 bis 300 Hz. Dies hat gerade bei Fingererkennungsystemen den Vorteil, dass eine Haut-Entspannung erzeugt werden kann, die eine bessere Erfassbarkeit garantiert bzw. geringere Fehlerraten.

Auch kann so die Signalempfindlichkeit gesteigert werden, z.B. wenn eine Person eine Fingerkuppe über eine Sensorfläche, einen Zeilensensor bewegt. Erfolgt dies mit einer Geschwindigkeit von z.B. 15 cm pro Sekunde, so erzeugt dies bei einem angenommenen Abstand der Papillarleisten der Fingerkuppe von 0,5 mm eine Frequenz von ca. 300 Hz. Statt einer Bewegung der Fingerkuppe kann es demnach auch vorgesehen sein, die Sensorfläche mit einer solchen Frequenz zu bewegen.

Eine Vibration kann durch Bewegung des gesamten Sensorfeldes oder gleichartige Bewegung aller z.B. piezoelektrischer Tastelemente erfolgen. Dies kann durch ein elektrisches Koppelfeld erzeugt werden, welches alle Tastelementes gleich ansteuert, so dass sich diese durch den umgekehrten Piezoeffekt gleich bewegen.

Wird das gesamte Sensorfeld bewegt, was auch durch Ansteuerung von Nanoröhrchen erfolgen kann, an denen das Sensorfeld befestigt ist, so kann eine Signalspannung an den Nanoröhrchen des Sensorfeldes z.B. erst dann gemessen werden, wenn diese durch eine Objektoberfläche kontaktiert werden, da erst dann eine elastische Verformung der bewegten Nanoröhrchen erfolgt.

In einer anderen Ausbildung kann es auch vorgesehen sein, dass nicht die Sensorfläche in ihrer Gesamtheit und damit alle Tastelemente bewegt wird, sondern dass an wenigstens ein Tastelement, bevorzugt an die Vielzahl von Tastelementen / alle Tastelemente in einem Tastelementenfeld, ein elektrisches, beispielsweise variierendes Signal angelegt wird, welches aktiv eine elastische Verformung und damit eine aktive Bewegung des jeweiligen Tastelementes, insbesondere von dessen jeweiliger Tastspitze erzeugt.

Beispielsweise kann dies bei piezoelektrisch arbeitenden Tastelementen vorgenommen werden, da solche Tastelemente zum einen durch eine Verformung eine Ladungstrennung bewirken und zum anderen in umgekehrter Richtung durch das Anlegen einer Spannung eine Verformung erzeugen können. Durch eine solche Verformung erfolgt demnach auch eine Bewegung der jeweiligen Tastspitze, also des freien Endes eines Tastelementes, so dass sich dieses optimal am Ort der Kontaktierung an die Struktur anlegen kann.

Z.B. kann so eine Bewegung der Tastspitzen im Bereich von 1 bis 5 oder 1 bis 10 Mikrometer erzeugt werden, insbesondere wodurch Mechanorezeptoren der Haut bzw. der Fingerkuppen angesprochen werden können, welche mechanische Kräfte in eine Nervenerregung umsetzen. Dies vergrößert die Anwendungsmöglichkeiten in die Richtung einer erzeugten haptischen Rückkopplung und verbessert auch die Erkennbarkeit bzw. reduziert Fehler.

Es besteht sodann beispielsweise in einer Ausführung die Möglichkeit, mittels wenigstens eines nicht aktiv bewegten Tastelementes ein von dessen Verformung abhängiges elektrisches Signal während der aktiven Bewegung wenigstens eines anderen Tastelementes zu erfassen. Es kann daher bei einer solchen Ausführung innerhalb eines Feldes von Tastelementen solche Tastelemente geben, die aktiv angesteuert werden, um eine Bewegung durch elastische Verformung zu bewirken und einen anderen Teil von Tastelementen, mittels dem gleichzeitig deren Verformung mittels der Erfassung von dem elektrischen Signal erfasst wird. Hier kann man sich beispielsweise zu nutze machen, dass bei einer entsprechend engen Anordnung der einzelnen Tastelemente die durch aktive Ansteuerung bewegten Tastelemente durch Stöße untereinander auch nicht aktiv angesteuerte Tastelemente bewegen, so dass diese sich an die Oberflächenstruktur anlegen können, wobei sodann an diesen nicht aktiv angesteuerten Tastelementen eine Messung des jeweils erzeugten Signals erfolgen kann.

In einer anderen Ausführung kann es auch vorgesehen sein, dass eines oder mehrere Tastelemente aktiv angesteuert werden, um eine optimale Anpassung an die Oberflächenstruktur zu erzielen, wobei sodann in einer Pause einer Bewegungsansteuerung mit dem wenigstens einen Tastelement ein von dessen Verformung abhängiges elektrisches Signal erfasst wird. Hier erfolgt demnach die Bewegung und Messung des elektrischen Signals mittels ein- und demselben Tastelements.

In einer wiederum anderen Ausführung kann es auch vorgesehen sein, dass während einer aktiven Bewegung mit dem wenigstens einen bewegten Tastelement ein von dessen Verformung abhängiges elektrisches Signal gleichzeitig erfasst wird. Dies kann besonders dann in bevorzugter Weise erzielt werden, wenn ein solches Tastelement, beispielsweise Nanoröhrchen, mehrere, insbesondere wenigstens zwei Elektrodenpaare aufweist, wobei ein Elektrodenpaar zur Ansteuerung und damit zur Erzielung einer aktiven Bewegung eingesetzt werden kann und mittels eines anderen Elektrodenpaars die Verformung des Tastelementes anhand der zwischen diesen Elektroden erzeugten Spannung erfasst wird.

Allgemein können in einer bevorzugten Ausführung Nanoröhrchen oder auch andere Tastelemente wenigstens ein verformungsrichtungsabhängiges elektrisches / elektronisches Signal bei Verformung erzeugen. Z.B. können mehrere Elektrodenpaare jeweils unterschiedlich orientiert an piezoelektrisch arbeitenden Tastelementen angeordnet sein.

Wie bereits eingangs erwähnt, kann es in einer bevorzugten Anwendung des Verfahrens vorgesehen sein, als Objekt bzw. als zu erfassende Objektoberfläche eine Fingerkuppe mit der Sensorfläche in Kontakt zu bringen, um so die Fingerkuppenrauhigkeit, insbesondere die Fingerkuppenrillen zu erfassen und hier insbesondere mit einer Vielzahl von insbesondere in einer Feldanordnung vorgesehenen Tastelementen, beispielsweise Nanoröhrchen, demnach ein elektronisches Abbild der Struktur bzw. der Rillen der Fingerkuppe zu erzeugen.

Hier kann mit Bezug auf diese Anwendung bzw. auch mit allgemeiner Gültigkeit vorgesehen sein, dass ein erfasstes elektronisches Abbild der Oberflächenstruktur mit einem Vergleichsbild verglichen wird, welches beispielsweise in der Signalerfassungsvorrichtung oder einer anderen Einheit gespeichert ist. Bei einer festgestellten Übereinstimmung, insbesondere innerhalb einer Toleranz, kann es sodann beispielsweise vorgesehen sein, dass Zugang zu einem bestimmten Dienst gewährt wird. Ein solcher Dienst kann jeglicher Art sein, wie beispielsweise die Freischaltung eines Gerätes zur Benutzung in Abhängigkeit von der festgestellten Identität eines Benutzers, nämlich dadurch, dass dessen Fingerkuppenbild durch das erfindungsgemäße Verfahren bzw. System abgetastet, erfasst und mit einem gespeicherten Bild verglichen wird. So können beispielsweise Kommunikationsgeräte oder Computer etc., d.h. insgesamt demnach sämtliche Arten elektronischer Geräte in Abhängigkeit eines solchen Vergleiches zur Nutzung frei gegeben werden.

Hierbei kann es insbesondere vorgesehen sein, dass das erfindungsgemäße System als Teil einer Oberfläche des jeweils frei zu gebenden Gerätes ausgebildet ist. Beispielsweise kann demnach ein Flächenbereich als erfindungsgemäße Sensorfläche in der Gehäuseoberfläche eines solchen Gerätes angeordnet sein, beispielsweise auch auf eine Art und Weise, die optisch nicht von anderen Bereichen zu unterscheiden ist.

Dabei kann z.B. die Tastfläche, also die durch die Tastspitzen der Tastelemente gebildete Fläche bündig mit den umgebenden Gehäusebereichen sein. Eine erfindungsgemäße Sensorfläche kann dabei auch deutlich größer sein als die übliche Fläche einer Fingerkuppe oder eines sonstigen Objektes. Z.B. kann eine gesamte Seitenfläche eines Gehäuses oder im Extremfall sogar das gesamte Gehäuse in der Oberfläche als erfindungsgemäße Sensorfläche ausgebildet sein. Z.B. bei manuell betätigten Geräten, wie z.B. Kommunikationsgeräten hat dies den Vorteil, dass ein Nutzer nicht bewusst eine Fingerkuppe zum Sensor führen muss, da bei manueller Handhabung normalerweise immer eine Fingerkuppe irgendwo das Gehäuse des Gerätes berührt.

Es kann demnach die gesamte Sensorfläche erfasst werden, innerhalb der Sensorfläche ein durch eine oder mehrere Fingerkuppe / Objekte kontaktierter Bereich ermittelt und dieser Bereich ausgewertet, insbesondere in Verbindung mit einem Vergleichsbild ausgewertet werden.

Grundsätzlich es ist demnach möglich, mittels eines Systems zur Durchführung des Verfahrens ein solches System auszubilden, dass in der Lage ist, allgemein Oberflächenstrukturen zur erfassen, z.B. um die Rauhigkeit von Oberflächen zu messen.

In allen möglichen Ausführungsformen sowie auch allgemein, d.h. ggfs. ohne Realisierung vorgenannter Ausführungen, kann es auch vorgesehen sein, dass ein Verfahren sowie ein System zur Erfassung der Kontaktierung einer Sensorfläche durch ein Objekt nicht nur zum Sensieren / Erfassen von Oberflächenstrukturen ausgebildet ist, sondern auch, ggfs. auch nur alleine ausgebildet ist, um eine haptische Signalisierung zu erzeugen, die von einer Person bei Kontakt mit der Sensorfläche fühlbar ist.

Es kann so vorgesehen sein, dass Oberflächen oder Teile von Oberflächen von Geräten, die solche erfindungsgemäße Sensorfläche aufweisen, sich in der Oberfläche zumindest bereichsweise fühlbar verändern können, z.B. durch die eingangs genannte aktive elektrische / elektronische Ansteuerung und dadurch erzeugte Bewegung der gesamten Sensorfläche oder auch von zumindest einigen Tastelementen der Sensorfläche.

Eine fühlbare Signalisierung, z.B. bereichsweise Bewegung von Tastelemente kann z.B. in Abhängigkeit von einem auslösenden Signal erfolgen, bei einem Kommunikationsgeräte z.B. in Abhängigkeit eines Rufeingangs, ggfs. weiterhin abhängig von einer Kommunikationsadresse, z.B. des Anrufers. So kann ein Kommunikationsgerät z.B. anhand einer Rufnummernkennung feststellen, dass ein Ruf von einer ganz bestimmten Person eingeht und eine gewünschte Haptik der Oberfläche des Kommunikationsgerätes zumindest bereichsweise einstellen, z.B. eine warme weiche angenehme Haptik, z.B. gegenüber einer harten Oberflächenhaptik im Grundzustand. Z.B. kann die gefühlte Haptik abhängig sein von der Art der Kommunikation, z.B. Anruf, SMS, Email etc.

In einer Weiterbildung kann es vorgesehen sein, dass in einer Matrix aus einer Vielzahl von Tastelementen, somit in ein Tastfeld, lokal begrenzt, ggfs. zeitlich lokal variabel ein Bereich von Tastelementes aktiv angesteuert wird, um eine Bewegung der Tastelemente und/oder lokale Änderung der Haptik zu erzeugen. Z.B. können so auch sich ausbreitende Wellenbewegungen in der Oberfläche erzeugt werden, insbesondere deren Wellenform einstellbar ist, z.B. sinus-, sägezahn- oder rechteckförmig.

In einer Weiterbildung des Verfahrens bzw. auch des Systems kann es vorgesehen sein, durch den Kontakt eines Objektes, z.B. eines Fingers, mit der Sensorfläche aus wenigstens einem Tastelement, insbesondere der vorbeschriebenen Art einen solchen Kontakt elektrisch / elektronisch festzustellen, insbesondere mittels der Signalerfassungsvorrichtung und eine haptische Rückkopplung durch die kontaktierten oder andere Tastelemente zu geben, insbesondere nachdem in Abhängigkeit des Kontaktes eine Aktion ausgelöst wurde, z.B. ein Schaltvorgang oder eine Zustandsänderung.

Bei einer Berührung eines Sensorfelder der beschriebenen Art, z.B. mit einem Feld aus vielen Tastsensoren kann so z.B. der Kontakt festgestellt werden und einem Nutzer, der mit der Fingerkuppe das Sensorfeld berührt eine haptische Rückmeldung gegeben werden, z.B. dadurch, dass für diese Rückkopplung die Tastelemente des Sensorfeldes aktiv angesteuert werden, wie es beschrieben wurde und z.B. so eine Bewegung erzeugen oder sich lokal in der Anordnung der Tastspitzen verändern etc.

So kann mit der Sensorfläche z.B. ein Schalter realisiert werden, der eine haptische Rückmeldung bei Betätigung gibt, z.B. der seinen Schaltzustand haptisch meldet, durch eine fühlbare Oberflächenveränderung. Z.B. kann nach Antippen der Sensoroberfläche sich deren Zustand von "hart" nach "weich" ändern, z.B. dadurch, dass lokal durch Anlegen eines elektrischen Signals die Tastelemente gebogen werden und dadurch gegenüber in Längsrichtung wirkenden Kräften eine größere Nachgiebigkeit aufweisen, somit also weicher wirken. Eine solche haptische Änderung kann am Ort der Betätigung der Sensorfläche, jedoch auch an jeder anderen Stelle der Sensorfläche erfolgen.

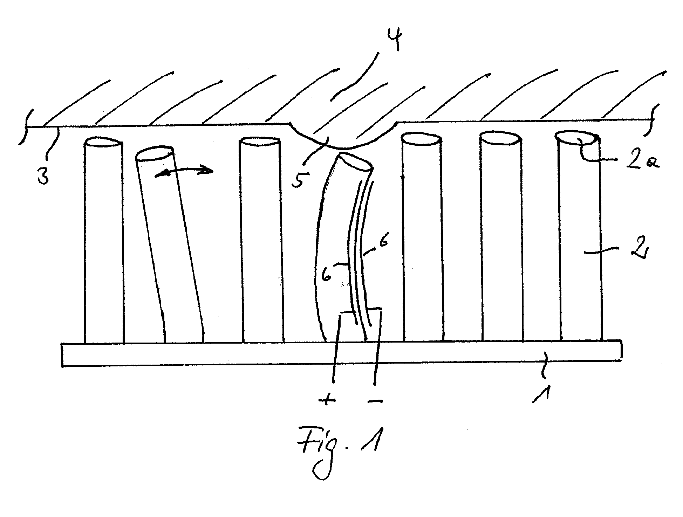

Ein Ausführungsbeispiel der Erfindung ist in der nachfolgenden Figur 1 schematisch dargestellt.

Diese Figur 1 zeigt in einer beispielhaften, stark vereinfachten Skizzierung ein erfindungsgemäßes System zur Durchführung des erfindungsgemäßen vorbeschriebenen Verfahrens. Erkennbar ist hier eine Sensoranordnung, umfassend eine Grundfläche 1, von welcher eine Vielzahl von Tastelementen 2 aufsteht, wobei diese vielen Tastelemente 2 in ihrer jeweiligen Längserstreckung parallel zueinander angeordnet sind, demnach also mit ihrem unteren Ende fest an der Grundfläche 1 verankert sind und ein oberes freies Ende 2a aufweisen.

Diese Tastelemente 2 können beispielsweise als sogenannte Nanoröhrchen ausgebildet sein, die einen Durchmesser von wenigen Nanometern aufweisen, hingegen eine Länge von mehreren Millimetern haben können. Hier sind Verhältnisse von Durchmesser zu Länge im Bereich von 1 zu 1.000.000 oder mehr möglich.

Die Figur 1 zeigt in dieser Darstellung eine Tastfläche, die durch die Vielzahl der nebeneinander angeordneten oberen freien Enden 2a der Tastelemente gebildet wird, und eine an diese herangeführte Objektoberfläche 3 eines hier nicht näher bezeichneten Objektes 4. Dieses Objekt 4 kann beispielsweise einen erhabenen Vorsprung 5 aufweisen, der bei Heranführung und Kontaktierung zwischen Oberfläche 3 und den Tastelementen 2 in diesem Beispiel eines der Tastelemente 2 elastisch verformt. Aufgrund dieser elastischen Verformung und eines beispielhaften piezoelektrischen Effektes kann eine Ladungstrennung erfolgen, die durch zwei Elektroden 6, hier z.B. innen- und außenseitig an dem Tastelement angeordnet sind, erfasst werden.

Die entsprechenden Elektrodenabgriffe jedes der einzelnen Tastelemente 2 können mit einer Signalerfassungsvorrichtung verbunden sein, so dass die Möglichkeit besteht, mittels dieser Signalerfassungsvorrichtung von jedem Tastelement 2 die jeweils erzeugte Spannung aufgrund einer elastischen Verformung aufzunehmen. Dabei können nicht nur wie hier symbolisch dargestellt ein Elektrodenpaar 6 vorgesehen sein, sondern gegebenenfalls auch mehrere Elektrodenpaare 6, insbesondere um Verformungen in mehreren Raumrichtungen oder mehrere Verformungsarten (Biegen, Stauchen, Tordieren etc) detektieren zu können. Demnach können also diese Elektrodenpaare auch in verschiedenen Raumrichtungen einander gegenüberliegend an den jeweiligen Tastelementen 2 angeordnet sein.

Es kann so ortsaufgelöst die jeweilige Verformung und damit das daraus resultierende elektrische Signal, mithin demnach die Struktur der Oberfläche eines in Kontakt stehenden Objektes oder auch lediglich die Information über eine Kontaktierung erfasst werden.

Ersichtlich ist es so, dass gerade bei Ausnutzung eines piezoelektrischen Effektes in umgekehrter Weise bei Anlegen einer Spannung an die Elektroden 6 eine elastische Verformung eines jeden Tastenelementes 2 erfolgen kann, so dass sich zum einen die Spitzen bzw. freien Enden 2a eines jeweiligen Tastelementes optimal an die jeweilige Oberflächenstruktur anlegen, so dass das dann von diesen Tastelementen elektrische Signal ein sehr genaues Abbild der Oberflächenstruktur erzeugt oder dass so auch zum anderen eine haptische Rückmeldung erfolgen kann

Die Figur 1 zeigt weiterhin linksseitig, dass ein Tastelement 2 statt einer Stauchung und Verbiegung auch einfach nur eine Verbiegung im Fußbereich erfahren kann, wenn es kontaktiert oder alternativ angesteuert wird. Durch andere hier nicht gezeigte Elektroden kann z.B. diese Art der Verformung von der Stauchung und Verbiegung unterschieden werden.

Bevorzugte Anwendung kann das erfindungsgemäße Verfahren bzw. System demnach z.B. dort finden, wo beliebige Oberflächen hinsichtlich ihrer Strukturierung erfasst und ausgewertet, insbesondere abgebildet werden sollen. Beispielsweise kann eine Anwendung auch bei der Erfassung geometrischer, d.h. lebender Strukturen, insbesondere von Fingerkuppen, Zehenkuppen oder auch anderen Hautbereichen von Menschen erfolgen. Hierbei sind gerade die Fingerkuppen bevorzugte Bereiche, da diese personenindividuell sind und als einzige Hautpartien keine Schuppen, sondern personenidentifizierende Rillen umfassen.

Das Verfahren und System kann auch eingesetzt werden, um Kontaktierung z.B. zum Zweck des Schaltens festzustellen und eine haptische Rückmeldung zu geben durch Veränderung der Form der Tastelemente.

## Patentansprüche

1. Verfahren zur Erfassung der Kontaktierung einer Sensorfläche durch ein Objekt (4), insbesondere zur Bestimmung der Oberflächenstruktur eines Oberflächenbereiches eines Objektes (4), **dadurch gekennzeichnet, dass** ein Oberflächenbereich (3) eines Objektes (4) eine Sensorfläche (1) kontaktiert, insbesondere in Kontakt gebracht wird mit einer Sensorfläche (1), welche wenigstens ein Tastelement (2) umfasst, wobei das wenigstens eine Tastelement (2) durch den Kontakt elastisch verformt wird und in Abhängigkeit der Verformung ein elektrisches Signal erzeugt, welches mittels einer Signalerfassungsvorrichtung erfasst wird.

2. Verfahren nach Anspruch 1, **dadurch gekennzeichnet, dass** die Sensorfläche (1) eine Vielzahl von Tastelementen (2) umfasst die zur Ausbildung eines Tastfeldes zumindest in zwei Dimensionen nebeneinander angeordnet sind, wobei durch den Kontakt die jeweils kontaktierten Tastelemente (2) der Sensorfläche (1) elastisch verformt werden und jeweils in Abhängigkeit ihrer Verformung ein elektrisches Signal erzeugen, wobei die elektrischen Signale der Tastelemente (2) mittels einer Signalerfassungsvorrichtung erfasst werden, insbesondere wobei wenigstens ein zumindest zweidimensionales elektrisches / elektronisches Abbild der Struktur der abgetasteten Objektfläche (3) erzeugt wird.

3. Verfahren nach einem der vorherigen Ansprüche, **dadurch gekennzeichnet, dass** als Tastelemente (2) der Sensorfläche (1) Nanoröhrchen (2) eingesetzt werden, die bei elastischer Verformung ein von der Verformung abhängiges elektrisches Signal erzeugen, insbesondere piezoelektrische Nanoröhrchen (2).

4. Verfahren nach Anspruch 3 oder 2, **dadurch gekennzeichnet, dass** die Tastelemente (2) bezüglich ihrer Längserstreckung parallel zueinander angeordnet sind und die Enden (2a) der Tastelemente (2) Tastspitzen (2a) ausbilden die die Objektoberfläche (3) kontaktieren, insbesondere wobei die Tastspitzen (2a) in einer Ebene oder einer zumindest zweidimensional gekrümmten Fläche angeordnet sind.

5. Verfahren nach einem der vorherigen Ansprüche, **dadurch gekennzeichnet, dass** die Sensorfläche (1), insbesondere die durch die Tastspitzen (2a) mehrerer Tastelemente (2) ausgebildete Tastfläche und die Objektoberfläche (3) während der Kontaktierung relativ zueinander bewegt werden, insbesondere wobei in Abhängigkeit der Bewegungsweite und / oder der Zeit der Bewegung die elektrischen Signale des wenigstens einen Tastelementes (2) erfasst und/oder gespeichert werden.

6. Verfahren nach Anspruch 5, **dadurch gekennzeichnet, dass** die Sensorfläche (1) in ihrer Gesamtheit wenigstens eindimensional oszillierend / vibrierend bewegt wird.

7. Verfahren nach einem der vorherigen Ansprüche, **dadurch gekennzeichnet, dass** an wenigstens ein Tastelement (2) ein elektrisches, insbesondere variierendes Signal angelegt wird, mittels welchem aktiv eine elastische Verformung und damit Bewegung des Tastelementes (2) erzeugt wird, insbesondere wodurch eine Bewegung der Tastspitze (2a) des Tastelementes (2) resultiert.

8. Verfahren nach Anspruch 7, **dadurch gekennzeichnet, dass** mittels wenigstens einem nicht aktiv bewegten Tastelement (2) ein von dessen Verformung abhängiges elektrisches Signal während der aktiven Bewegung wenigstens eines anderen Tastelementes (2) erfasst wird oder das in Pausen einer Bewegungsansteuerung mit dem wenigstens einen Tastelement (2) ein von dessen Verformung abhängiges elektrisches Signal erfasst wird oder das während einer aktiven Bewegung mit dem wenigstens einen bewegten Tastelement (2) ein von dessen Verformung abhängiges elektrisches Signal erfasst wird.

9. Verfahren nach einem der vorherigen Ansprüche, **dadurch gekennzeichnet, dass** eine Fingerkuppe mit der Sensorfläche (1)/ Tastfläche in Kontakt gebracht wird zur Erfassung der Fingerkuppenrauhigkeit, insbesondere zur Erfassung der Fingerkuppenrillen, wobei mittels den Tastelementen (2) und der Signalerfassungsvorrichtung ein elektronisches Bild der Struktur einer Fingerkuppe erfasst wird, insbesondere welches mit einem gespeicherten Vergleichsbild verglichen wird, insbesondere zur Gewährung des Zugangs zu einem Dienst.

10. Verfahren nach einem der vorherigen Ansprüche, **dadurch gekennzeichnet, dass** nach Feststellung einer Kontaktierung durch Erfassung der von den kontaktierten Tastelementen (2) erzeugten elektrischen Signale die kontaktierten oder andere Tastelemente (2) aktiv angesteuert werden, um eine Verformung und somit andere Haptik der Tastelemente (2) zu bewirken.

11. System zur Erfassung der Kontaktierung einer Sensorfläche (1) durch ein Objekt (4), insbesondere zur Erfassung der Struktur eines Oberflächenbereiches (3) eines Objektes (4), **dadurch gekennzeichnet, dass** es einen Sensor mit einer Sensorfläche (1) umfasst, welche wenigstens ein Tastelement (2) aufweist, das in Kontakt mit dem Oberflächenbereich (3) bringbar ist, wobei das wenigstens eine Tastelement (2) durch den Kontakt elastisch verformbar ist und in Abhängigkeit der Verformung mit dem wenigstens einen Tastelement (2) ein elektrisches Signal erzeugbar ist.
